# EUROPÄISCHE PATENTSCHRIFT

(11) **EP 0 987 452 B1**
(45) Veröffentlichungstag und Bekanntmachung des Hinweises auf die Patenterteilung: **25.02.2004**
(21) Anmeldenummer: 99118569.5
(22) Anmeldetag: 20.09.1999
(51) Int. Cl.: F16B 25/00, F16B 33/00

(54) **Furchschraube**
Thread tapping screw
Vis autotaraudante

(30) Priorität: 18.09.1998 DE 19842770
(43) Veröffentlichungstag der Anmeldung: 22.03.2000
(73) Patentinhaber: Richard Bergner Verbindungstechnik GmbH & Co KG, 91126 Schwabach (DE)
(72) Erfinder: Friedrich, Christoph, Dr.-Ing., 91183 Abenberg (DE); Thomala, Wolfgang, Dr.-Ing., 91126 Rednitzhembach (DE)
(74) Vertreter: Tergau & Pohl Patentanwälte

(56) Entgegenhaltungen:
- FR-A- 2 603 077
- US-A- 4 657 459
- US-A- 4 773 111
- US-A- 4 802 807

## Beschreibung

Die Erfindung betrifft eine Furchschraube. Solche Schrauben werden in ein Gewindeloch eingedreht, wobei sie sich ihr Gewinde durch einen Materialverdrängungsprozess selbst furchen. Furchschrauben werden üblicherweise aus Stahl gefertigt. Gegebenenfalls kann die oberflächennahe Schicht des gewindetragenden Schaftabschnittes etwa durch eine Einsatzhärtung oder durch Nitrierung gehärtet sein. Eine solche Furchschraube ist in W094/25764 beschrieben. Darüber hinaus sind auch Furchschrauben aus Kunststoff bekannt, die für Bauteile aus Kunststoff vorgesehen sind. Eine solche Furchschraube ist Gegenstand des DE-Gebrauchsmusters G 92 18 727.7. Der Schraubenwerkstoff weist eine höhere Härte auf als der Bauteilwerkstoff, in den die Kunststoffschrauben einzuschrauben sind. Die größere Härte wird dadurch erreicht, dass festigkeitserhöhte Füllstoffe wie Glasfasern, Glaskugeln oder Kohlefasern beigemengt sind.

Ausgehend von diesen bekannten Furchschrauben liegt der Erfindung die Aufgabe zugrunde, eine besonders leichte Furchschraube zu schaffen.

Die gemäß Anspruch 1 vorgeschlagene Furchschraube besteht aus einem niedrigfesten Nichteisenwerkstoff. Der das selbstfurchende Gewinde tragende Schaftbereich ist mit einer Hartschicht überzogen, die eine größere Härte aufweist als der Schraubenwerkstoff. Eine solche Schraube kann zum einen sehr leicht gestaltet werden und kann damit für Leichtbaukonstruktionen verwendet werden. Außerdem können als Schraubenwerkstoff Materialien verwendet werden, die nicht korrosiv sind, so dass die von Stahlschrauben bekannten Probleme nicht auftreten. Erfindungsgemäß wird als Schraubenwerkstoff Aluminium oder Magnesium oder eine Al- bzw. Mg-Legierungen verwendet. Besonders vorteilhaft ist, dass Schraubenwerkstoffe Verwendung finden können, die gegenüber dem Bauteilwerkstoff eine vergleichbare oder sogar einer geringere Härte aufweisen. So ist es beispielsweise vorteilhaft, für die Montage von Aluminium-Außenfassaden an Gebäuden Schrauben ebenfalls aus Aluminium zu verwenden. Der Gewindebereich des Schraubenschaftes wird mit einer Hartschicht versehen, die beispielsweise durch Anodisieren hergestellt werden kann.

Ganz generell stehen für die Beschichtung viele unterschiedliche Verfahren zur Verfügung. Schrauben aus metallischem Werkstoff können z.B. durch eine Modifikation des Schraubenwerkstoffes, etwa durch Nitrieren oder durch Anodisieren erhalten werden. Denkbar ist auch, dass die Beschichtung durch eine Plasmabehandlung erzielt wird. Eine andere Möglichkeit der Beschichtung besteht darin, ein anderes Material, z.B. durch thermisches Spritzen oder Vakuumabscheidung (PVD oder CVD) aufzubringen. Die jeweilige Schichtdicke hängt dabei vom Einsatzzweck ab. Bewährt haben sich Schichtdicken zwischen etwa 10 und 50 µm.

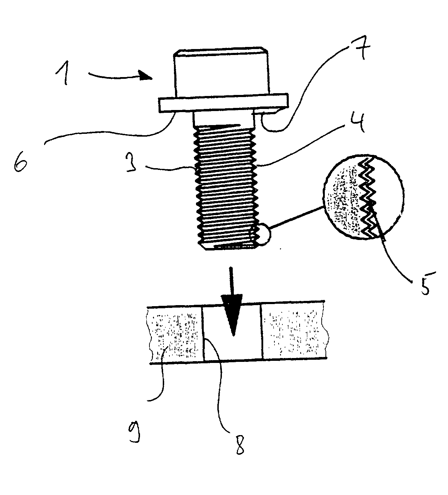

Die beigefügte Zeichnung zeigt eine Furchschraube 1, die in üblicher Weise gestaltet ist, die nämlich einen Schraubenkopf und einen mit einem Gewinde 3 versehenen Schaft 4 aufweist. Der Gewindebereich des Schaftes ist mit einer Hartschicht 5 überzogen, die auf verschiedene Weise erhalten werden kann. Im Falle von Kunststoffschrauben ist die Hartschicht 5 eine Metallschicht. Diese wird durch Metallisieren aufgebracht. Dabei wird die Schraube in eine Reaktionslösung getaucht, die ein Reduktionsmittel und ein Metallsalz enthält. Es handelt sich hier um ein fremdstromloses bzw. chemisches Abscheideverfahren. Eine andere Möglichkeit besteht darin, die Metallschicht durch Aufdampfen herzustellen. Im Falle von metallischen, etwa aus Aluminium oder Magnesium bestehenden Schrauben steht eine Vielzahl von Verfahren zur Verfügung. Die Hartschicht kann durch Oberflächenmodifikation, z.B. durch Nitrieren, Anodisieren oder Plasmabehandlung erzeugt werden. Sie kann aber auch wie bei einer Kunststoffschraube durch Aufbringen einer Schicht aus einem anderen Material, beispielsweise durch thermisches Spritzen PVD oder CVD erhalten werden. Die Beschichtung kann auch die gesamte Oberfläche der Schraube umfassen. Bei dem dargestellten Ausführungsbeispiel ist sie auch an der Unterseite des Schraubenkopfes bzw. an dessen Auflagefläche 6 vorhanden. Die Hartschicht kann dabei einen größeren Reibbeiwert zum Bauteilwerkstoff aufweisen als das Schraubenmaterial selbst, was sich positiver auf das Losdrehverhalten auswirkt. Dieses ist weiter verbessert, wenn an der Auflagefläche eine Sperrverzahnung, etwa in Form von sich radial erstreckenden Formvorsprüngen 7, vorhanden ist, die ebenfalls von der Hartschicht überzogen ist.

Eine Schraube der beschriebenen Ausgestaltung wird in das Bohrloch 8 eines Bauteils 9 eingeschraubt, wobei sie sich ihr Gewinde selbst furcht. Der Schraubenwerkstoff kann dabei eine vergleichbare oder sogar eine geringere Härte aufweisen wie das Bauteil 9 selbst. So ist es beispielsweise denkbar, dass eine Kunststoffschraube mit einer metallischen Hartschicht 5 in ein Bauteil aus Magnesium oder Aluminium eingeschraubt wird. Neben den Schraubenwerkstoffen Kunststoff und Aluminium kommt insbesondere auch Magnesium in Frage. Es sind beliebige Kombinationen aus den genannten Schrauben- und Bauteilwerkstoffen denkbar. Es kann also z. B. eine Magnesiumschraube in ein Aluminium- oder Kunststoffbauteil eingeschraubt werden. Gleichermaßen kann eine Aluminiumschraube für Kunststoff- und Magnesiumbauteile verwendet werden.

Für die Herstellung einer Al-Schraube kann beispielsweise eine Aluminium-Knetlegierung verwendet werden, die unter der numerischen Bezeichnung EN AW-6013 (gemäß DIN EN573.3) bekannt ist. Zur Erzeugung der Hartschicht wird eine solche Schraube in einer sauren, z.B. 5-10% Chromsäure enthaltenden Reaktionslösung als Anode geschaltet. Die dabei erhaltene Anodisierschicht besteht im Wesentlichen aus Al₂O₃ und haftet fest an der Schraubenoberfläche.

## Patentansprüche

1. Furchschraube (1) aus einem niedrigfesten Nichteisenwerkstoff mit einem ein selbstfurchendes Gewinde (3) tragenden Schaftbereich (4), und mit einer zumindest den Schaftbereich (4) überziehenden Hartschicht (5), die eine größere Härte aufweist als der Schraubenwerkstoff,
**dadurch gekennzeichnet,**
**dass** der Schraubenwerkstoff Aluminium oder Magnesium oder eine Al- bzw. Mg-Legierung ist.

2. Furchschraube nach Anspruch 1,
**dadurch gekennzeichnet,**
**dass** die Hartschicht (5) durch eine Modifikation des Schraubenwerkstoffes erhalten ist.

3. Furchschraube (1) nach Anspruch 2,
**dadurch gekennzeichnet,**
**dass** zumindest deren Schaftbereich (4) anodisch oxidiert ist, und die Hartschicht (5) eine Anodisierschicht ist.

4. Furchschraube (1) nach Anspruch 1,
**dadurch gekennzeichnet,**
**dass** die Hartschicht (5) durch eine Beschichtung erhalten ist.

5. Furchschraube (1) nach einem der Ansprüche 1 bis 4,
**gekennzeichnet durch**
eine metallische Hartschicht (5).

6. Furchschraube (1) nach einem der Ansprüche 1 bis 5,
**dadurch gekennzeichnet,**
**dass** die Schichtdicke der Hartschicht (5) etwa 10 bis 50 µm beträgt.

7. Furchschraube (1) nach einem der Ansprüche 1 bis 6,
**dadurch gekennzeichnet,**
**dass** die Auflage (6) des Schraubenkopfes (2) eine mit einer Hartschicht (5) überzogene Sperrverzahnung aufweist.

8. Bauteil (9) mit einem Bohrloch (8) und einer darin eingedrehten Schraube,
**dadurch gekennzeichnet,**
**dass** die Schraube eine Furchschraube (1) gemäß einem der Ansprüche 1 bis 6 ist.

9. Bauteil (9) nach Anspruch 8,
**dadurch gekennzeichnet,**
**dass** der Schraubenwerkstoff eine dem Bauteilwerkstoff vergleichbare oder eine geringere Härte aufweist.

## Claims

1. Thread-tapping screw (1) made from a low-strength nonferrous material, having a shank region (4), which bears a self-tapping thread (3), and having a hard layer (5), which covers at least the shank region (4) and has a higher hardness than the screw material, **characterized in that** the screw material is aluminium or magnesium or an Al or Mg alloy.

2. Thread-tapping screw according to Claim 1, **characterized in that** the hard layer (5) is obtained by modifying the screw material.

3. Thread-tapping screw (1) according to Claim 2, **characterized in that** at least its shank region (4) is anodically oxidized, and the hard layer (5) is an anodized layer.

4. Thread-tapping screw (1) according to Claim 1, **characterized in that** the hard layer (5) is obtained by means of a coating.

5. Thread-tapping screw (1) according to one of Claims 1 to 4, **characterized by** a metallic hard layer (5).

6. Thread-tapping screw (1) according to one of Claims 1 to 5, **characterized in that** the layer thickness of the hard layer (5) is approximately 10 to 5 0 µm.

7. Thread-tapping screw (1) according to one of Claims 1 to 6, **characterized in that** the support (6) of the screw head (2) has catch toothing covered with a hard layer (5).

8. Component (9) having a drilled hole (8) and a screw which has been screwed into it, **characterized in that** the screw is a thread-tapping screw (1) according to one of Claims 1 to 6.

9. Component (9) according to Claim 8, **characterized in that** the screw material has a hardness which is similar to or lower than that of the component material.

## Revendications

1. Vis à refoulement de matière (1) fabriquée à partir d'un matériau non ferreux de faible résistance comprenant une zone de tige (4) qui porte un filetage auto-refoulant (3), et une couche dure (5) qui recouvre au moins la zone de tige (4) et qui présente une dureté supérieure à celle du matériau de vis, **caractérisée en ce que** le matériau de vis est de l'aluminium ou du magnésium, ou un alliage d'aluminium ou de magnésium.

2. Vis à refoulement de matière selon la revendication 1, **caractérisée en ce que** la couche dure (5) est obtenue par une modification du matériau de vis.

3. Vis à refoulement de matière (1) selon la revendication 2, **caractérisée en ce que** sa zone de tige (4) au moins est oxydée par voie anodique et la couche dure (5) est une couche d'anodisation.

4. Vis à refoulement de matière (1) selon la revendication 1, **caractérisée en ce que** la couche dure (5) est obtenue par un revêtement.

5. Vis à refoulement de matière (1) selon l'une des revendications 1 à 4, **caractérisée par** une couche dure (5) métallique.

6. Vis à refoulement de matière (1) selon l'une des revendications 1 à 5, **caractérisée en ce que** l'épaisseur de la couche dure (5) atteint environ 10 à 50 µm.

7. Vis à refoulement de matière (1) selon l'une des revendications 1 à 6, **caractérisée en ce que** l'assise (6) de la tête de vis (2) présente une denture de blocage recouverte d'une couche dure (5).

8. Élément de construction (9) avec un perçage (8) et une vis vissée dans celui-ci, **caractérisé en ce que** la vis est une vis à refoulement de matière conformément à l'une des revendications 1 à 6.

9. Élément de construction (9) selon la revendication 8, **caractérisé en ce que** le matériau de vis présente une dureté inférieure ou comparable à celle du matériau de l'élément de construction.
